(19) **Europäisches Patentamt / European Patent Office / Office européen des brevets**

(11) **EP 3 333 957 A1**

(12) **EUROPEAN PATENT APPLICATION**
published in accordance with Art. 153(4) EPC

(43) Date of publication:
**13.06.2018 Bulletin 2018/24**

(51) Int Cl.:
**H01M 10/0525** (2010.01)   **H01M 2/16** (2006.01)
**H01M 4/505** (2010.01)   **H01M 4/525** (2010.01)
**H01M 10/0566** (2010.01)

(21) Application number: **16832733.6**

(22) Date of filing: **15.07.2016**

(86) International application number:
**PCT/JP2016/070956**

(87) International publication number:
**WO 2017/022454 (09.02.2017 Gazette 2017/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2015   JP 2015154088**

(71) Applicant: **Automotive Energy Supply Corporation**
**Zama-shi, Kanagawa 252-0012 (JP)**

(72) Inventors:
• **OHARA, Kenji**
  **Zama-shi**
  **Kanagawa 252-0012 (JP)**

• **SUGA, Sohei**
  **Zama-shi**
  **Kanagawa 252-0012 (JP)**
• **SHINOHARA, Koichi**
  **Zama-shi**
  **Kanagawa 252-0012 (JP)**
• **HORIUCHI, Toshihiro**
  **Zama-shi**
  **Kanagawa 252-0012 (JP)**
• **AOYAGI, Masanori**
  **Zama-shi**
  **Kanagawa 252-0012 (JP)**
• **NISHIYAMA, Junko**
  **Zama-shi**
  **Kanagawa 252-0012 (JP)**

(74) Representative: **Hoefer & Partner Patentanwälte mbB**
**Pilgersheimer Straße 20**
**81543 München (DE)**

(54) **LITHIUM-ION SECONDARY CELL**

(57)   A lithium-ion secondary battery includes an electricity generation element including a cathode including a cathode active material layer arranged on a cathode current collector, an anode including an anode active material layer arranged on an anode current collector, a separator, and an electrolyte. The anode active material layer includes graphite. When the battery is charged to 5 V, the battery has an excess ratio of 1 or higher that is a ratio of a specific capacity of the cathode to a specific capacity of the anode, and the separator has a thermal shrinkage of 13% or lower. The lithium-ion secondary battery prevents heat generation in an overcharge state and maintains safety.

**EP 3 333 957 A1**

**(Cont. next page)**

FIG. 1

**Description**

**FIELD**

The present invention relates to a nonaqueous-electrolyte battery, and more particularly, to a lithium-ion secondary battery.

**BACKGROUND**

Nonaqueous-electrolyte batteries are used for automobiles including hybrid vehicles and electric vehicles. Lithium-ion secondary batteries are commonly used as such on-vehicle batteries. As lithium-ion secondary batteries have larger capacity through development efforts, their safety needs to be ensured.

A lithium-ion secondary battery charged after fully charged can typically be in an overcharge state, which is unstable. A lithium-ion secondary battery using, as its cathode material, a lithium composite oxide with a layered crystal structure having a high energy density can have an overcharge state, in which lithium ions continuously move from the cathode (positive electrode) to the anode (negative electrode). The limited capacity of the anode for lithium ions (or anode capacity) can then cause overflow of lithium ions from the anode.

One method for preventing such overcharge includes monitoring the voltage of a lithium-ion secondary battery to prevent an overcharge. Another method includes adding a particular additive to an electrolyte for electrochemical overcharge protection.

Japanese Unexamined Patent Application Publication No. 2013-178936 describes a lithium-ion secondary battery with a reversible oxidation/reduction agent (redox shuttle additive) added to the electrolyte. The lithium-ion secondary battery described in Japanese Unexamined Patent Application Publication No. 2013-178936 uses a lithium transition metal phosphate as a cathode material, has the ratio of the anode capacity to the cathode capacity of 105% or more and 180% or less per unit area, and uses lithium fluoroborate added to the electrolyte as a redox shuttle additive. Japanese Unexamined Patent Application Publication No. 2013-178936 does not describe the use of a lithium composite oxide with a high energy density, layered crystal structure as its cathode material.

**BRIEF SUMMARY**

**TECHNICAL PROBLEM**

One or more aspects of the present invention are directed to a lithium-ion secondary battery that prevents heat generation in an overcharge state and maintains safety.

**SOLUTION TO PROBLEM**

A lithium-ion secondary battery according to an aspect of the present invention includes an electricity generation element including a cathode including a cathode active material layer arranged on a cathode current collector, an anode including an anode active material layer arranged on an anode current collector, a separator, and an electrolyte. The anode active material layer includes graphite. When the battery is charged to 5 V, the battery has an excess ratio of 1 or higher that is a specific capacity of the cathode to a specific capacity of the anode, and the separator has a thermal shrinkage of 13% or lower.

**ADVANTAGEOUS EFFECTS**

The lithium-ion secondary battery according to the above aspects of the present invention maintains safety, and is less likely to generate internal heat in an overcharge state and thus prevents an increase in the battery temperature.

**BRIEF DESCRIPTION OF DRAWING**

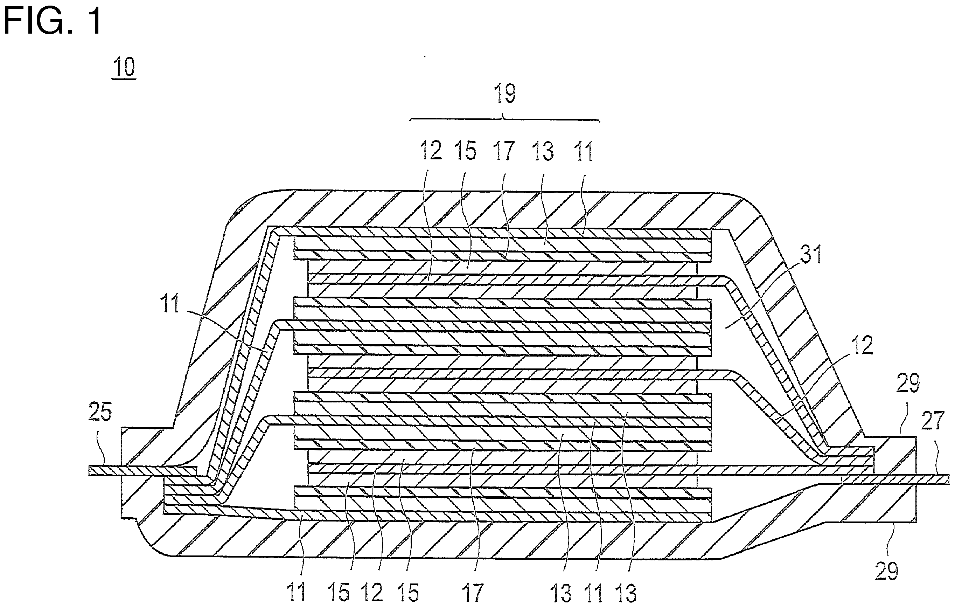

Fig. 1 is a schematic cross-sectional view of a lithium-ion secondary battery according to one embodiment of the present invention.

**DETAILED DESCRIPTION**

Embodiments of the present invention will now be described. In the present embodiment, a cathode is a plate- or sheet-like battery member having a cathode active material layer formed by applying or rolling a mixture of a cathode active material, a binder, and an optional conduction aid onto a cathode current collector such as metallic foil, and drying the mixture. An anode is a plate- or sheet-like battery member having an anode active material layer formed by applying a mixture of an anode active material, a binder, and an optional conduction aid onto an anode current collector. A separator is a film-like battery member that separates the cathode from the anode for achieving conduction of lithium ions between the anode and the cathode. An electrolyte is an electroconductive solution obtained by dissolving an ionic substance in a solvent. In the present embodiment, the electrolyte may be a nonaqueous electrolyte. An electricity generation element including the cathode, the anode, the separator, and the electrolyte is a unit of main battery components. Typically, the cathode and the anode are superposed (or stacked) on each other with the separator between them, and the stack is immersed in the electrolyte.

The lithium-ion secondary battery in the embodiment contains the electricity generation element in an enclosure. The electricity generation element may be sealed in the enclosure. The electricity generation element being sealed refers to the element being packaged by the enclosure and isolated from the outside air. The enclosure is thus a bag that can have the electricity generation element sealed inside.

Anodes usable in all the embodiments include an anode in which an anode active material layer containing an anode active material is arranged on an anode current collector. In some embodiments, the anode may include an anode active material layer formed by applying or rolling a mixture of an anode active material, a binder, and an optional conduction aid onto an anode current collector of metallic foil such as copper foil, and drying the mixture. In each embodiment, the anode active material may include graphite. Graphite has a stable structure, and is suited to an anode material for a high-capacity battery. The anode active material may also include amorphous carbon, in addition to graphite particles. A mixed carbon material including both graphite and amorphous carbon improves the regeneration performance of the battery.

Graphite, also referred to as black lead, is a carbon material that is a hexagonal plate crystal. Graphite may be in the form of particles. Amorphous carbon is a generally amorphous carbon material with a network structure of randomly combined microcrystals. Amorphous carbon may also have a structure partially similar to a graphite structure. Examples of amorphous carbon include carbon black, coke, activated carbon, carbon fibers, hard carbon, soft carbon, and mesoporous carbon. Amorphous carbon may be in the form of particles.

Examples of the conduction aid optionally used for the anode active material layer include carbon fibers such as carbon nanofibers, carbon black such as acetylene black and Ketjenblack, and carbon materials such as activated carbon, mesoporous carbon, fullerenes, and carbon nanotubes. Additionally, the anode active material layer may include, as appropriate, an additive commonly used for preparing an electrode, such as a thickener, a dispersant, or a stabilizer.

Examples of the binder used for the anode active material layer include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene-butadiene rubber (SBR), butadiene rubber (BR), chloroprene rubber (CR), isoprene rubber (IR), and acrylonitrile-butadiene rubber (NBR), or polysaccharides such as carboxymethylcellulose (CMC), xanthan gum, guar gum, and pectin.

Cathodes usable in all the embodiments include a cathode including a cathode active material layer containing a cathode active material arranged on a cathode current collector. In some embodiments, the cathode may include a cathode active material layer formed by applying or rolling a mixture of a cathode active material, a binder, and an optional conduction aid onto a cathode current collector of metallic foil such as aluminum foil, and drying the mixture. The cathode active material may be a lithium transition metal oxide, such as a lithium nickel-based oxide (e.g., $LiNiO_2$), a lithium cobalt-based oxide (e.g., $LiCoO_2$), a lithium manganese-based oxide (e.g., $LiMn_2O_4$), and a mixture of these. The cathode active material may also be a lithium-nickel-cobalt-manganese composite oxide represented by the general formula $Li_xNi_yCo_zMn_{(1-y-z)}O_2$, where $1 \leq x \leq 1.2$, $y + z < 1$ with y and z being positive numbers, and y is 0.5 or less. A larger ratio of manganese tends to prevent formation of a single phase composite oxide. Thus, the ratio of manganese is desirably $1-y-z \leq 0.4$. In addition, a larger ratio of cobalt increases the cost and also reduces the capacity. Thus, the ratio of cobalt is desirably $z < y$ and $z < 1 - y - z$. To achieve a high-capacity battery, the ratio is preferably $y > 1 - y - z$ and $y > z$. The lithium-nickel-cobalt-manganese composite oxide may have a layered crystal structure.

Examples of the conduction aid optionally used for the cathode active material layer include carbon fibers such as carbon nanofibers, carbon black such as acetylene black and Ketjenblack, and carbon materials such as activated carbon, graphite, mesoporous carbon, fullerenes, and carbon nanotubes. Additionally, the cathode active material layer may include, as appropriate, an additive commonly used for preparing an electrode, such as a thickener, a dispersant, or a stabilizer.

Examples of the binder used for the cathode active material layer include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene-butadiene rubber (SBR), butadiene rubber (BR), chloroprene rubber (CR), isoprene rubber (IR), and acrylonitrile-butadiene rubber (NBR), or polysaccharides such as carboxymethylcellulose (CMC), xanthan gum, guar gum, and pectin.

An electrolyte usable in all the embodiments may be a nonaqueous electrolyte and a mixture containing a chain carbonate such as dimethyl carbonate (DMC), diethyl carbonate (DEC), di-n-propyl carbonate, di-i-propyl carbonate, di-n-butyl carbonate, di-isobutyl carbonate, or di-t-butyl carbonate, and a cyclic carbonate such as propylene carbonate (PC) or ethylene carbonate (EC). The electrolyte is obtained by dissolving a lithium salt such as lithium hexafluorophosphate ($LiPF_6$), lithium tetrafluoroborate ($LiBF_4$), or lithium perchlorate ($LiClO_4$) in such a carbonate mixture.

The electrolyte may contain additives, in addition to the above components. The additives optionally added to the electrolyte may be substances that electrochemically decompose during the charging and discharging process of the battery to cover the electrodes and other parts with coatings. In particular, an additive for stabilizing the anode structure on the anode surface may be desirably used. Examples of such additives include an additive containing a compound with sulfur in its molecule (hereinafter, a sulfur-containing additive), such as cyclic disulfonates (e.g., methylene methane disulfonate, ethylene methane disulfonate, and propylene methane disulfonate), cyclic sulfonates (e.g., sultone), and chain sulfonates (e.g., methylene-bis(benzenesulfonate), methylene-bis(phenylmethanesulfonate), and methylene-bis(ethanesulfonate)). Moreover, vinylene carbonate, vinylethylene carbonate, propylene carbonate methacrylate, and propylene carbonate acrylate may also be additives for covering the cathode and the anode with protective coatings during the charging and discharging process of the battery. Other examples of the additives for covering the cathode and the anode with protective coatings during the charging and discharging process of the battery include fluoroethylene carbonate, difluoroethylene carbonate, trifluoroethylene carbonate, chloroethylene carbonate, dichloroethylene carbonate, and trichloroethylene carbonate. These additives may protect the cathode active material containing the lithium nickel-based composite oxide against an attack from the sulfur-containing additive. The additives constitute an amount of not more than 20% by weight, preferably not more than 15% by weight, and further preferably not more than 10% by weight relative to the weight of the overall electrolyte.

In an embodiment, the separator includes an olefinic resin layer. The olefinic resin layer is formed from a polyolefin produced by polymerizing or copolymerizing • -olefins such as ethylene, propylene, butene, pentene, and hexene. In an embodiment, the olefinic resin layer may have holes that close upon an increase in the battery temperature. More specifically, the layer may be formed from a porous or microporous polyolefin. If the battery temperature increases, the olefinic resin layer having this structure allows the separator to close (or shut down), and blocks the ion flow. To achieve a shutdown, a porous polyethylene film is suitable.

A separator may include a cross-linked olefinic resin. Examples of such a resin include a chemically cross-linked polymer using a polyfunctional substance containing multiple polymerizable groups in a single molecule (e.g., trimethylolpropane triacrylate, trimethylolpropane trimethacrylate, pentaerythritol triacrylate, and pentaerythritol trimethacrylate), and an electronically cross-linked polymer polymerized by generating a radical using ionizing radiation.

In particular, the separator may have a thermal shrinkage percentage of 13% or less. The thermal shrinkage percentage of film materials including the separator is a value indicating a dimensional change (reduction) caused when heat is applied to the film materials, and is calculated based on, for example, JIS-C-2151, JIS-C-2318, and ASTMDD-1204. The value of the thermal shrinkage percentage herein represents a shrinkage in the area of a sample piece of the film materials. The sample piece is suspended in a hot-air circulating thermostatic oven, the thermostatic oven is heated from 25 to 180 °C for 30 minutes, and then the thermostatic oven is cooled to room temperature before the shrinkage is measured. In other words, the thermal shrinkage percentage can be calculated using the formula:

$$100 \times [\text{(the area of the film material before the test)} - \text{(the area of the film material after the test)}] / \text{(the area of the film material before the test)}.$$

For a separator having a thermal shrinkage percentage of more than 13%, heat generated by a micro short circuit may increase the area of film breakage, and causes a high current to flow.

The separator may include both the olefinic resin layer and a heat-resistant fine-particle layer. The separator including a heat-resistant fine-particle layer prevents the battery from heating and reduces thermal shrinkage in the separator. The heat-resistant fine particles may be inorganic fine particles that are heat-resistant to withstand temperatures up to 150 °C or more and stable against electrochemical reactions. Examples of the inorganic fine particles include inorganic oxides such as silica, alumina (• -alumina, • -alumina, or •-alumina), iron oxide, titanium oxide, barium titanate, and zirconium oxide, and minerals such as boehmite, zeolite, apatite, kaolin, spinel, mica, and mullite. The separator including the olefinic resin layer and the heat-resistant resin layer in this manner may be herein referred to as a ceramic separator.

The ceramic separator including the olefinic resin layer and the heat-resistant fine-particle layer has the heat-resistant fine-particle layer stacked on the surface of an olefinic resin film. The heat-resistant fine-particle layer may be arranged on one side or both sides of the olefinic resin film. The thickness ratio of the entire heat-resistant fine-particle layer to the olefinic resin layer is about 1/10 to 1/2, and preferably about 1/8 to 1/3. The excessively high thickness of the heat-resistant fine-particle layer may increase the amount of sulfur-containing additive decomposition products contained in the electrolyte. The excessively low thickness of the heat-resistant fine-particle layer may not improve the heat resistance of the separator.

The structure of the lithium-ion secondary battery according to the present embodiment will now be described with reference to the drawings. Fig. 1 shows an example cross-sectional view of the lithium-ion secondary battery. The lithium-ion secondary battery 10 includes an anode current collector 11, an anode active material layer 13, a separator 17, a cathode current collector 12, and a cathode active material layer 15 as main components. Although Fig. 1 shows the anode active material layer 13 arranged on both sides of the anode current collector 11 and the cathode active material layer 15 arranged on both sides of the cathode current collector 12, each active material layer may be formed on only one side of the corresponding current collector. The anode current collector 11, the cathode current collector 12, the anode active material layer 13, the cathode active material layer 15, and the separator 17 are a single unit of the battery, or an electricity generation element (a cell 19 in the figure). The separator 17 may include a heat-resistant fine-particle layer and an olefinic resin film (both not shown). Such a plurality of cells 19 are stacked on one another with separators 17 between them. The extensions from the anode current collectors 11 are collectively bonded to an anode lead 25, whereas the extensions from the cathode current collectors 12 are collectively bonded to a cathode lead 27. The cathode lead may be an aluminum sheet, and the anode lead may be a copper sheet. In some cases, each lead may be coated by other metals (e.g., nickel, tin, and solder) or a high polymer material. The cathode lead is welded to the cathode, and the anode lead to the anode. The stack of the multiple cells is packaged in an enclosure 29 with the welded anode lead 25 and the welded cathode lead 27 extending outward. The enclosure 29 is filled with an electrolyte 31. The enclosure 29 is formed by bonding the peripheral edges of two superposed laminates by heat fusion. Although Fig. 1 shows the anode lead 25 and the cathode lead 27 provided at opposing sides of the enclosure 29 (double-sided tab), the anode lead 25 and the cathode lead 27 may also be provided at one side of the enclosure 29 (more specifically, the anode lead 25 and the cathode lead 27 may extend outward from one side of the enclosure 29, or single-sided tab).

When the lithium-ion secondary battery prepared in this manner is charged to 5 V, the ratio between the cathode specific capacity and the anode specific capacity may be 1 or higher. The lithium-ion secondary battery charged to 5 V corresponds to the battery charged into an overcharge state. In an overcharge state, the proper balance between the cathode specific capacity (or the ability of the cathode to discharge lithium ions per unit volume) and the anode specific capacity (or the ability of the anode to hold lithium ions per unit volume) ensures the safety of the overcharged battery. When the ratio between the cathode specific capacity and the anode specific capacity is lower than 1, the anode capacity exceeds the cathode capacity, and thus the battery capacity may decrease. The ratio between the cathode specific capacity and the anode specific capacity can be increased to 1 or higher by choosing an appropriate electrode active material or changing the combination ratio of the electrode active materials and the other additives. For example, a larger amount of the cathode active material may be applied to the cathode current collector, or a smaller amount of the anode active material may be applied to the anode current collector. To maintain the proper balance between the cathode specific capacity and the anode specific capacity, the ratio between the cathode specific capacity and the anode specific capacity determined when the lithium-ion secondary battery is charged to 5 V may be 2 or lower. The ratio between the cathode specific capacity and the anode specific capacity is preferably 1.5 or lower, and further preferably 1.1 or lower. The ratio between the cathode specific capacity and the anode specific capacity determined when the lithium-ion secondary battery is charged to 5 V may be herein referred to as an excess ratio.

The anode and the cathode may be prepared to have the ratio between the anode capacity (A) and the cathode capacity (C) (hereinafter A/C ratio) of 1.25 or less. A high A/C ratio represents a large lithium-ion capacity of one anode relative to the amount of lithium-ion discharge from one cathode, meaning that the anode holds a large amount of lithium ions. At an excessively large anode capacity, the overcharged battery may not maintain safety. Thus, the A/C ratio is to be maintained at a proper value. To achieve a large battery capacity, the A/C ratio is desirably 1.05 or higher.

In another embodiment, the ratio between the battery power and the battery capacity (W/Wh) may be less than 25. The battery power represents the average output power over 10 seconds. To provide a high-capacity lithium-ion secondary battery for a vehicle having a cruising range of more than 100 km, multiple batteries (cells) are combined to form a set battery (battery pack). In this case, each battery may have output power that is not too high. The ratio between the battery power and the battery capacity (power-capacity ratio) may be 2 or more and less than 25. With the on-vehicle battery having a power-capacity ratio lower than 2, the battery cannot follow the load characteristics due to high resistance. In contrast, with the battery having a power-capacity ratio equal to or higher than 25, the battery may have an insufficient capacity per area due to a typical use of a thin-film electrode. The power-capacity ratio is preferably 5 or more and 20 or less, and further preferably 10 or more and 15 or less.

A battery to be used in a high-capacity battery pack is highly preferable to have a battery capacity of 5 Ah or higher. To achieve the proper balance of the power-capacity ratio described above, the battery capacity is preferably 5 Ah or more and 70 Ah or less. The battery capacity is further preferably 45 Ah or more and 55 Ah or less.

Examples

[Preparation of Anode]

Surface-covered natural graphite powder (specific capacity: 390 mAh/g) as an anode active material; and carbon black powder as a conduction aid, and a polyvinylidene fluoride resin (PVDF, Kureha W#7200, Kureha Battery Materials Japan Co., Ltd.) as a binder resin were added to deionized water in a solid content mass ratio of 94:6. The water was then stirred to disperse these materials uniformly in the water to form slurry. The slurry was applied to an 8-• m-thick piece of copper foil to be an anode current collector. Then, the electrode was heated at 125 °C for ten minutes to evaporate the water to form an anode active material layer. Additionally, the anode active material layer was pressed to have a porosity of 35%. The anode active material layer was applied to one surface of the anode current collector to complete the anode. In Table 1, Gr is this anode.

Another anode was prepared. Hard carbon (400 mAh/g) as an anode active material; and carbon black powder as a conduction aid, and PVDF as a binder resin were added to deionized water in a solid content mass ratio of 94:6. The water was then stirred to disperse these materials uniformly to form slurry. The slurry was applied to an 8-• m-thick piece of copper foil to be an anode current collector. Then, the electrode was heated at 125 °C for ten minutes to evaporate the water to form an anode active material layer. Additionally, the anode active material layer was pressed to have a porosity of 35%. The anode active material layer was applied to one surface of the anode current collector to complete the anode. In Table 1, HC is this anode.

[Preparation of Cathode]

Lithium nickel cobalt manganese oxide (NCM433; nickel:cobalt:manganese = 4:3:3, hereinafter NCM) as a cathode active material, carbon black powder as a conduction aid, and PVDF (Kureha W#7200, Kureha Battery Materials Japan Co., Ltd.) as a binder resin were added to N-methyl-pyrrolidone (NMP), a solvent, in a solid content mass ratio of 93:3:4. Anhydrous oxalic acid (molecular weight: 90) was added to this mixture as an organic moisture absorbent in an amount of 0.03 parts by mass based on 100 parts by mass in terms of solid content excluding the NMP from the mixture. The mixture was then stirred to disperse these materials uniformly to form slurry. The slurry was applied to a 15-• m-thick piece of aluminum foil to be a cathode current collector. Then, a cathode active material layer was formed by heating the electrode at 125 °C for ten minutes to evaporate the NMP. Additionally, the cathode active material layer was pressed to have a porosity of 25%. The cathode active material layer was applied to one surface of the cathode current collector to complete the cathode.

A composite cathode was further prepared. A composite cathode active material including lithium nickel cobalt manganese oxide (NCM433; nickel:cobalt:manganese = 4:3:3) and $LiMnO_2$ with a 10-• m particle size (D50) (hereinafter, LMO1) mixed in a ratio indicated in Table 1, carbon black powder as a conduction aid, and PVDF (Kureha W#7200, Kureha Battery Materials Japan Co., Ltd.) as a binder resin were added to NMP, which is a solvent. The solid content mass ratio of the cathode active material to the conduction aid and the binder resin was 90:5:5. Anhydrous oxalic acid (molecular weight: 90) was added to this mixture as an organic moisture absorbent in an amount of 0.03 parts by mass based on 100 parts by mass in terms of solid content excluding the NMP from the mixture. The mixture was then stirred to disperse these materials uniformly to form slurry. The slurry was applied to a 15-• m-thick piece of aluminum foil to be a cathode current collector. Then, a cathode active material layer was formed by heating the electrode at 125 °C for ten minutes to evaporate the NMP. Additionally, the cathode active material layer was pressed to have a porosity of 30%. The cathode active material layer was applied to one surface of the cathode current collector to complete the cathode.

[Separators]

The following five separators were prepared:

PP01: polypropylene, 25-• m thick, 40% thermal shrinkage, 50% puncture strength
CL01: polypropylene (electronically cross-linked), 25-• m thick, 12% thermal shrinkage, 2% puncture strength
CL02: polypropylene (electronically cross-linked), 25-• m thick, 13% thermal shrinkage, 1% puncture strength
CL03: polypropylene (electronically cross-linked), 25-• m thick, 17% thermal shrinkage, 5% puncture strength
CC01: polypropylene-polyethylene-polypropylene laminate (coated with aluminum oxide), 20-• m thick, 13% thermal shrinkage, 30% puncture strength

Methods for measuring thermal shrinkage and the puncture strength of these separators will be described later.

[Electrolyte]

Ethylene carbonate (EC), propylene carbonate (PC), and diethyl carbonate (DEC) were mixed in a nonaqueous solvent. The mixture ratio of EC to PC and DEC was 25:5:70 (by volume). In the nonaqueous solvent, lithium hexafluorophosphate ($LiPF_6$) was dissolved as an electrolyte salt at a concentration of 0.9 mol/L. In the resultant solvent, cyclic disulfonate (methylene methanedisulfonate, or MMDS) and vinylene carbonate (VC) were each dissolved as additives at a concentration of 1 wt %. The resulting electrolyte was used.

[Preparation of Lithium-ion Secondary Battery]

The anode and cathode plates prepared in the manner described above were each cut into a predetermined-sized (anode: 254 mm × 184 mm, cathode: 250 mm × 180 mm) rectangle. A cathode plate uncoated part for connecting a terminal was ultrasonically welded to an aluminum cathode lead terminal. Similarly, an anode plate uncoated part was ultrasonically welded to a nickel anode lead terminal having the same size as the cathode lead terminal. The anode plate and the cathode plate were arranged on both separator sides to have the anode and cathode active material layers superposed on each other with the separator between them, and aligned the cathode lead and the anode lead at one side. This completes the electrode plate stack. Two aluminum laminated films were bonded together by heat fusion of the corresponding sides excluding one long side of each film to prepare a bag-shaped laminated enclosure. The electrode stack was inserted in the laminated enclosure. The enclosure was then filled with the electrolyte to vacuum-impregnate the electrode stack. Then, the opening was heat-sealed under reduced pressure to form a single-sided-tab stacked lithium-ion battery. The stacked lithium-ion battery underwent the initial charge and discharge, which is followed by high-temperature aging. This completes the stacked lithium-ion battery with a battery capacity of 5 Ah.

[Initial Charge and Discharge]

The initial charge and discharge were performed between 0 and 100% of the battery remaining capacity, or the state of charge (SOC) at an ambient temperature of 55 °C. The charge and discharge were performed in the order of constant current charge (CC charge) to 4.1 V with 0.1 C current, constant voltage charge (CV charge) at 4.1 V, and constant current discharge (CC discharge) to 2.5 V with 0.1 C current.

[Overcharge Capacity]

The battery with the SOC of 0% was charged to a battery voltage of 5 V with 1 C current. When the battery voltage reached 5 V, the battery capacity (defined as X mAh) was measured and determined to be a cathode overcharge capacity.

[Heating Test]

The prepared battery was discharged to a battery voltage of 4.15 V, and placed in the thermostatic oven. The temperature inside the thermostatic oven was increased to 150 °C in increments of 1 °C per minute. When the ambient temperature reached 150 °C, a change in the battery voltage was measured.
The battery states at this time were classified into three types: the battery on fire (burning), the battery generating heat (heating), and no change observed in the battery voltage and the battery temperature (no change).

[Electrode Capacity]

The battery with the SOC of 0% was disassembled, and the total area of the cathode was measured (a $cm^2$). The overcharge capacity was calculated using the equation, $x = X/a$ ($mAh/cm^2$), where X is the value described above. The calculated value was determined to be the overcharge specific capacity of the cathode.
The anode was removed from the disassembled battery, washed with an EC/DEC solvent, and punched into a coin shape with a diameter of 12 mm. The coin-shaped anode was used to prepare a coin cell with metal lithium as a cathode. The coin cell was CC/CV-charged for 24 hours with 0.1 C current, and its capacity (defined as Y mAh) was measured. The anode capacity per area, y, was calculated ($mAh/cm^2$) and determined to be the anode specific capacity. The value y is herein assumed to be substantially the same as the anode overcharge capacity, and is used in the calculation below.

[Excess Ratio]

An excess ratio was determined by dividing the value x by the value y (x/y). The excess ratio, which is a value of the cathode overcharge specific capacity relative to the anode specific capacity, indicates the balance between the amount of lithium ions discharged from the cathode and the allowable amount of lithium ions held by the anode as described above.

Measurement of SOC-OCV (Remaining Capacity-Open Circuit Voltage)

The battery was CC-charged from a battery voltage of 3V to the SOC of 50% with 0.2 CC current. The battery was allowed to stand in this state for one hour. Then, the battery voltage was determined to be the SOC of 50%-OCV (V), or a value of the open circuit voltage of the battery with a 50% remaining capacity.

[Battery Capacity]

The product of the value of 50% SOC-OCV (V) by the value of the battery capacity charged with 0.2 C current (Ah) was determined to be the battery capacity (Wh).

[Measurement of Power]

The maximum current value for achieving the lowest voltage (3V) at 25 °C for 10 seconds from the 50% SOC-OCV was measured. The product of the value of 50% SOC-OCV by the maximum current value (A) was determined to be the battery power (W).

[Thermal Shrinkage Percentage]

The separator was suspended in a hot-air circulating thermostatic oven, and was heated from 25 to 180 °C for 30 minutes, and then cooled to room temperature before the area of the sample piece was measured. The thermal shrinkage was calculated using the formula: $100 \times$ [(the area of the separator before the test) - (the area of the separator after the test)] / (the area of the separator before the test).

[Puncture Strength (Degree of elongation)]

The sample separator was fixed. The sample surface was punctured with a semicircular needle at a rate of $50\pm0.5$ mm per minute. The needle has a diameter of 1.0 mm with its semicircular point having a radius of 0.5 mm. The maximum load applied until the needle was through the surface was measured.

Table 1: Characteristics of lithium-ion secondary battery including heat-resistant separator

| | | Ex. 1 | Ex. 2 | Ex. 3 | Ex. 4 | Ex. 5 | Comp. 1 | Comp. 2 | Comp. 3 | Ref. 1 | Ref. 2 | Ref. 3 | Ref. 4 | Ref. 5 | Ref. 6 | Ref. 7 | Ref. 8 |
|---|---|---|---|---|---|---|---|---|---|---|---|---|---|---|---|---|---|
| Cathode active material 1 | - | NCM | NCM | NCM | NCM | NCM | NCM | NCM | NCM | NCM | NCM | NCM | NCM | NCM | NCM | NCM | NCM |
| Cathode active material 2 | - | LMO1 | - | LMO1 | - | - | - | LMO1 | - | LMO1 | LMO1 | LMO1 | - | LMO1 | LMO1 | - | - |
| Proportion of cathode active material 1 | wt% | 70 | 100 | 70 | 100 | 100 | 100 | 70 | 100 | 50 | 50 | 70 | 100 | 70 | 70 | 100 | 100 |
| Proportion of cathode active material 2 | wt% | 30 | 0 | 30 | 0 | 0 | 0 | 30 | 0 | 50 | 50 | 30 | 0 | 30 | 30 | 0 | 0 |
| Cathode active material | - | Gr | Gr | Gr | Gr | Gr | Gr | Gr | Gr | Gr | HC | HC | HC | Gr | HC | Gr | HC |
| Separator type | - | CL01 | CL01 | CC01 | CC01 | CL02 | CL03 | PP01 | PP01 | PP01 | PP01 | PP01 | PP01 | PP01 | PP01 | PP01 | PP01 |
| Separator thickness | • m | 25 | 25 | 20 | 20 | 25 | 25 | 25 | 25 | 25 | 25 | 25 | 25 | 25 | 25 | 25 | 25 |
| Separator thermal shrinkage | % | 12 | 12 | 13 | 13 | 13 | 17 | 40 | 40 | 40 | 40 | 40 | 40 | 40 | 40 | 40 | 40 |
| Separator puncture strength | % | 2 | 2 | 30 | 30 | 1 | 5 | 50 | 50 | 50 | 50 | 50 | 50 | 50 | 50 | 50 | 50 |
| Design A/C ratio | - | 1.2 | 1.2 | 1.2 | 1.2 | 1.2 | 1.2 | 1.2 | 1.2 | 1.2 | 1.2 | 1.2 | 1.2 | 1.5 | 1.5 | 1.5 | 1.5 |
| Number of layers | - | 20 | 20 | 20 | 20 | 20 | 20 | 20 | 20 | 20 | 20 | 20 | 20 | 20 | 20 | 20 | 20 |

EP 3 333 957 A1

(continued)

| | | Ex. 1 | Ex. 2 | Ex. 3 | Ex. 4 | Ex. 5 | Comp. 1 | Comp. 2 | Comp. 3 | Ref. 1 | Ref. 2 | Ref. 3 | Ref. 4 | Ref. 5 | Ref. 6 | Ref. 7 | Ref. 8 |
|---|---|---|---|---|---|---|---|---|---|---|---|---|---|---|---|---|---|
| Cell capacity | Ah | 46.0 | 51.7 | 46.0 | 51.7 | 51.7 | 51.7 | 46.0 | 51.7 | 42.0 | 37.5 | 41.5 | 47.3 | 45.0 | 40.0 | 50.0 | 45.8 |
| 50% SOC-OCV | V | 3.68 | 3.65 | 3.68 | 3.65 | 3.65 | 3.65 | 3.68 | 3.65 | 3.75 | 3.58 | 3.57 | 3.55 | 3.68 | 3.57 | 3.65 | 3.55 |
| 10 sec DCR | m• | 1.1 | 1.0 | 1.1 | 1.0 | 1.0 | 1.0 | 1.1 | 1.0 | 1.1 | 1.2 | 1.1 | 1.1 | 1.1 | 1.1 | 1.0 | 1.1 |
| Capacity | Wh | 169.3 | 188.6 | 169.3 | 188.6 | 188.6 | 188.6 | 169.3 | 188.6 | 157.5 | 134.3 | 148.2 | 168.0 | 165.6 | 142.8 | 182.5 | 162.7 |
| Output | w | 2317 | 2326 | 2317 | 2326 | 2326 | 2326 | 2317 | 2326 | 2467 | 1730 | 1785 | 1808 | 2317 | 1785 | 2326 | 1808 |
| Output-capacity ratio | W/Wh | 14 | 12 | 14 | 12 | 12 | 12 | 14 | 12 | 16 | 13 | 12 | 11 | 14 | 13 | 13 | 11 |
| Cathode Overcharge Capacity X | mAh | 62 | 72 | 62 | 72 | 72 | 72 | 62 | 72 | 50 | 45 | 56 | 66 | 61 | 54 | 70 | 64 |
| Cathode overcharge specific capacity x | mAh/cm$^2$ | 3.45 | 4.02 | 3.45 | 4.02 | 4.02 | 4.02 | 3.45 | 4.02 | 2.80 | 2.50 | 3.11 | 3.68 | 3.38 | 3.00 | 3.89 | 3.56 |
| Anode capacity y | mAh/cm$^2$ | 3.24 | 3.69 | 3.24 | 3.69 | 3.69 | 3.69 | 3.24 | 3.69 | 2.93 | 2.76 | 3.05 | 3.48 | 4.05 | 3.81 | 4.62 | 4.34 |
| Excess ratio | - | 106% | 109% | 106% | 109% | 109% | 109% | 106% | 109% | 96% | 91% | 102% | 106% | 83% | 79% | 84% | 82% |
| Heating test | - | No change | No change | No change | No change | No change | Heating | Heating | Heating | No change | No change | No change | No change | No change | No change | No change | No change |

Note: Ex. is Example, Comp. is Comparative Example, and Ref. is Reference Example.

The experiments in reference examples 1 to 8 and comparative examples 2 and 3 were performed using the separator PP01 among the separators described above.

The excess ratio increases as the proportion of NCM in the composite cathode increases. In comparative examples 2 and 3, in which graphite was used as an anode material and the excess ratio exceeded 100%, heating was observed in the heating test. In reference examples 3 and 4, in which hard carbon was used as an anode material and the excess ratio exceeded 100%, no change was observed in the heating test. The results suggest that a smaller proportion of NCM in the composite cathode and an anode material of hard carbon can yield good results at least in a heating test. To use a lithium-ion secondary battery as an on-vehicle large-capacity battery, (1) the proportion of NCM in the composite cathode is to be maximized, and (2) graphite is to be used as an anode material. This increases the capacity and prevents deterioration in the electrode materials. Adjusting the A/C ratio to satisfy these two requirements was examined. In reference examples 5 to 8, the excess ratio equal to or less than 100% was achieved by adjusting the A/C ratio to 1.5. The heating tests in reference examples 5 to 8 reveal that increasing the A/C ratio can be one method to satisfy the above two requirements. Increasing the A/C ratio equates to increasing the amount of anode active material applied to the anode current collector, and thus increasing the weight of the anode, or increasing the weight of the battery. Another method to satisfy the two requirements was then examined.

Examples 1 to 5 are experimental examples in which a separator having a thermal shrinkage of 13% or less was used. Heating was not observed in the heating test in any of the examples. Although the battery according to each example shows an excess ratio of more than 100%, the separator can prevent an increase in the battery temperature. In contrast, heating was observed in the heating test in comparative example 1, in which the excess ratio exceeded 100% and the separator showed a thermal shrinkage of more than 13%. More specifically, a safe battery with a large capacity and a high energy density can be obtained by selecting an appropriate separator based on the combination of electrode materials and the ratio between the electrode specific capacities.

The foregoing embodiments of the present invention are merely given to illustrate examples and not intended to limit the technical scope of the invention to a particular embodiment or to a specific configuration.

**Claims**

1. A lithium-ion secondary battery, comprising:

    an electricity generation element including

        a cathode including a cathode active material layer arranged on a cathode current collector,
        an anode including an anode active material layer arranged on an anode current collector,
        a separator, and
        an electrolyte,

    wherein the anode active material layer includes graphite, and
    when the battery is charged to 5 V, the battery has an excess ratio of 1 or higher that is a ratio of a specific capacity of the cathode to a specific capacity of the anode, and the separator has a thermal shrinkage of 13% or lower.

2. The lithium-ion secondary battery according to claim 1, wherein the battery has a power to capacity ratio (W/Wh) of less than 25.

3. The lithium-ion secondary battery according to claim 1 or claim 2, wherein the battery has a capacity of 5 Ah or more.

4. The lithium-ion secondary battery according to any one of claims 1 to 3, wherein the cathode active material layer includes a lithium nickel manganese cobalt composite oxide having a layered crystal structure represented by the general formula

$$Li_xNi_yCo_zMn_{(1-y-z)}O_2.$$

5. The lithium-ion secondary battery according to any one of claims 1 to 4, wherein the anode capacity (A) and the cathode capacity (C) have a ratio (A/C) of 1.25 or less.

# FIG. 1

<u>10</u>

EP 3 333 957 A1

## INTERNATIONAL SEARCH REPORT

| International application No. |
|---|
| PCT/JP2016/070956 |

| A. CLASSIFICATION OF SUBJECT MATTER |
|---|
| *H01M10/0525*(2010.01)i, *H01M2/16*(2006.01)i, *H01M4/505*(2010.01)i, *H01M4/525*(2010.01)i, *H01M10/0566*(2010.01)i |

According to International Patent Classification (IPC) or to both national classification and IPC

| B. FIELDS SEARCHED |
|---|
| Minimum documentation searched (classification system followed by classification symbols) |
| H01M10/0525, H01M2/16, H01M4/505, H01M4/525, H01M10/0566 |

| Documentation searched other than minimum documentation to the extent that such documents are included in the fields searched |
|---|
| Jitsuyo Shinan Koho          1922–1996    Jitsuyo Shinan Toroku Koho    1996–2016 |
| Kokai Jitsuyo Shinan Koho    1971–2016    Toroku Jitsuyo Shinan Koho    1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-227931 A (Matsushita Electric Industrial Co., Ltd.), 12 August 2004 (12.08.2004), examples 1 to 4 (Family: none) | 1-5 |
| A | JP 2013-178936 A (TDK Corp.), 09 September 2013 (09.09.2013), paragraph [0052] (Family: none) | 1-5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 August 2016 (10.08.16) | 23 August 2016 (23.08.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/070956

C (Continuation). DOCUMENTS CONSIDERED TO BE RELEVANT

| Category* | Citation of document, with indication, where appropriate, of the relevant passages | Relevant to claim No. |
|---|---|---|
| A | WO 2004/091014 A1 (Nitto Denko Corp.), 21 October 2004 (21.10.2004), page 16, lines 13 to 26 & JP 2004-323827 A   & JP 2011-71127 A & JP 2011-71128 A   & US 2007/0184340 A1 paragraphs [0072] to [0073] & EP 1650818 A1   & EP 2306553 A1 & KR 10-2006-0002959 A  & CN 1771616 A & KR 10-1025187 B1 | 1-5 |
| A | JP 2013-157136 A (Toyota Motor Corp.), 15 August 2013 (15.08.2013), (Family: none) | 1-5 |
| A | JP 2002-151075 A (Sanyo Electric Co., Ltd.), 24 May 2002 (24.05.2002), & US 2002/0090552 A1   & US 2004/0029007 A1 | 1-5 |
| A | JP 2015-046295 A (Shin-Kobe Electric Machinery Co., Ltd.), 12 March 2015 (12.03.2015), (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013178936 A